# FASCICULE DE BREVET EUROPEEN

(11) **EP 4 295 508 B1**
(45) Date de publication et mention de la délivrance du brevet: **31.12.2025**
(21) Numéro de dépôt: 22709001.6
(22) Date de dépôt: 15.02.2022
(51) Int. Cl.: H04B 10/114, H04B 10/116

(54) **LUMINAIRE CONNECTABLE À UN RÉSEAU DE TÉLÉCOMMUNICATION**
AN EIN TELEKOMMUNIKATIONSNETZ ANSCHLIESSBARE LEUCHTE
LIGHT FIXTURE CONNECTABLE TO A TELECOMMUNICATION NETWORK

(30) Priorité: 22.02.2021 FR 2101711
(43) Date de publication de la demande: 27.12.2023
(73) Titulaire: Lucibel SA, 76360 Barentin (FR)
(72) Inventeur: DAVID, Thibault, 94410 SAINT MAURICE (FR); GRANOTIER, Pierre, 78600 LE MESNIL LE ROI (FR); DEBOOS, Alexis, 27100 LE VAUDREUIL (FR)
(74) Mandataire: Martin, Marie-Aude
(86) Numéro de dépôt international: PCT/FR2022/050277
(87) Numéro de publication internationale: WO 2022/175628

(56) Documents cités:
- WO-A1-2019/173543
- US-A1- 2017 141 154

## Description

La présente invention se rapporte au domaine de l'éclairage et concerne plus particulièrement un luminaire adapté pour former un relais optique de transmission de données dans un réseau de télécommunication tel que le réseau Internet.

Elle s'applique particulièrement mais non exclusivement à une dalle d'éclairage pour faux-plafond permettant une communication sans fil par la lumière avec un terminal distant selon un protocole de communication sans fil. L'invention est particulièrement bien adaptée à l'éclairage de pièces intérieures d'immeubles professionnels.

Afin d'éclairer une pièce, telle que par exemple, un bureau ou un couloir, il est connu de monter des dalles d'éclairage, encore appelées dalles lumineuses, dans un faux-plafond fixé sous le plafond de la pièce. A cette fin, le faux-plafond comprend de manière connue une structure comportant des poutrelles dont la section est par exemple en forme de H, disposées selon un quadrillage horizontal et sur lesquelles sont ordinairement montés des panneaux opaques et des dalles d'éclairage. Chaque dalle d'éclairage comprend par exemple un cadre de forme carrée qui est monté sur les poutrelles et à l'intérieur duquel sont montés les éléments d'éclairage.

La présente invention se rapporte à une dalle ou un tel panneau adapté pour émettre ou recevoir un flux de données numériques selon un protocole de communication sans fil de type « Li-Fi ».

Un protocole de communication sans fil permet de relier sans fil plusieurs appareils informatiques au sein d'un réseau informatique afin de permettre la transmission de données entre eux.

On peut citer en tant que protocole de communication sans fil connu de l'art antérieur le « Wi-Fi » régi par la norme « IEEE 802 » relative aux réseaux locaux basés sur la transmission de données numériques. Le Wi-Fi permet notamment de créer un réseau local sans fil présentant un débit de transmission d'environ 1 gigabits par seconde, sur un rayon de plusieurs dizaines de mètres, en utilisant les ondes radioélectriques du spectre électromagnétique.

Un autre technique de communication numérique sans fil connue de l'art antérieur est celle basée sur la technologie « Li-Fi », abréviation de « Light-Fidelity » selon la terminologie anglo-saxonne, qui consiste à utiliser la partie optique du spectre électromagnétique (spectre visible ou infrarouge) à la place des ondes radioélectriques utilisées dans le cadre du Wi-Fi, pour diffuser numériquement un contenu multimédia tel que de la musique ou une vidéo, par exemple au travers du réseau Internet.

La communication selon le protocole Li-Fi consiste à moduler l'intensité lumineuse d'une source à diodes électroluminescentes (fréquemment désignées par l'acronyme « LED » pour « Light-Emitting Diode » en terminologie anglo-saxonne ) reliée au réseau Internet. Les capacités de commutation entre un état « allumé » et un état « éteint » d'une LED peuvent aller jusqu'à un milliard de fois par seconde ce qui rend indétectable par l'œil humain les changements d'état de ces LEDs.

Selon une explication simplifiée, une suite d'états d'allumage et d'extinction d'une LED permet de créer un flux numérique correspondant au signal d'entrée reçu par le luminaire relié au réseau Internet. La capacité de commutation des LEDs à très haute fréquence permet de transmettre du son, des images, des vidéos, ou encore d'afficher le contenu d'une page Internet sur un terminal de communication numérique adapté pour recevoir des données de type LiFi.

Les avantages de la technique de communication par Li-Fi par rapport à la technique de communication par Wi-Fi sont multiples.

Parmi ces avantages, on peut citer notamment la vitesse de transmission des données par Li-Fi qui est largement supérieure à celle atteinte par la technologie WI-FI en ce qu'elle peut atteindre une vitesse supérieure à un gigabit par seconde, le fait par ailleurs qu'aucune onde radioélectrique, dont les effets sur la santé sont encore incertains, n'est transmise et enfin l'absence d'interférences entre les ondes radioélectriques et l'absence de brouillage électromagnétique.

De plus, le protocole de communication Li-Fi permet avantageusement de désengorger la bande de fréquence de 2,4 GigaHertz utilisée à ce jour par la quasi-totalité des protocoles de communication sans fil.

En outre, les applications de la technologie de communication Li-Fi sont nombreuses. A titre d'exemple, cette technologie peut être utilisée dans les lieux ou espaces publics tels que la voirie, les parcs, les musées, les gares, etc. ou les espaces privés tels que les magasins mais également dans les environnements professionnels. Par exemple, il est possible grâce à la technologie Li-Fi de combiner à la fois l'éclairage d'un tableau dans un musée et la diffusion d'un contenu relatif à ce tableau.

Il existe donc un besoin de développer divers facteurs de forme de luminaires connectables à un réseau selon la technologie Li-Fi qui permettent de répondre aux diverses applications déjà couvertes par les appareils d'éclairage classiques.

L'intégration de la technologie Li-Fi selon les différents facteurs de forme d'appareils d'éclairage peut s'avérer particulièrement complexe, voire inadaptée. En effet, pour intégrer la technologie Li-Fi, il est nécessaire prévoir un emplacement dans le luminaire pour recevoir le module Li-Fi. Ce module Li-Fi consiste en général en un émetteur Li-Fi et un récepteur Li-Fi et forme un composant électronique relativement encombrant, son intégration dans l'appareil d'éclairage étant à l'origine de nouvelles contraintes de dimensionnement.

En particulier, l'intégration de la technologie Li-Fi dans un panneau d'éclairage est particulièrement complexe du fait de l'épaisseur réduite du panneau. En outre, les panneaux d'éclairage doivent fournir une lumière homogène et peu consommatrice d'énergie, autant de critères difficiles à respecter dès lors que la source d'éclairage fonctionne selon la technologie Li-Fi.

On connaît déjà de l'art antérieur, notamment de la demande de brevet FR3077619A1 un panneau d'éclairage intégrant la technologie Li-Fi. Le panneau comprend sur une paroi frontale d'émission de lumière des zones de parement venant s'étendre à l'aplomb des composants électroniques constituant le module générique Li-Fi en vue de les masquer. Bien que les composants électroniques du module Li-Fi soient ainsi rendus invisibles, il n'en reste pas moins que la présence des zones de parement vient briser l'homogénéité de l'éclairage surfacique du panneau lumineux. Le document WO2019/173543 divulgue un luminaire recevant par une fibre optique, une lumière dans laquelle sont mixées une lumière visible d'éclairage, et une lumière infrarouge codant des données.

Un but de la présente invention est de fournir un luminaire adapté à la communication de données bidirectionnelle par la lumière selon la technologie LiFi ne présentant pas les inconvénients de l'art antérieur.

A cet effet, l'invention a notamment pour objet un luminaire adapté pour la transmission de données bidirectionnelle par Li-Fi, , le luminaire étant destiné à former un relais optique de transmission bidirectionnelle de données entre un module Li-Fi adapté à l'émission et/ou la réception d'un faisceau de lumière infrarouge (IR) modulé par des données à transmettre selon la technologie Li-Fi et un terminal distant, comprenant un réceptacle délimitant les dimensions extérieures du luminaire pourvu d'une paroi frontale comprenant une fenêtre d'éclairage et une source lumineuse d'éclairage dans le spectre visible, le luminaire définit un premier chemin optique de propagation d'un faisceau de lumière visible l'intérieur du réceptacle entre la source d'éclairage et la fenêtre d'éclairage, caractérisé en ce que le luminaire définit un deuxième chemin optique de propagation d'un faisceau de lumière infrarouge à l'intérieur du réceptacle jusqu'à la fenêtre d'éclairage pour former une voie de transmission de données bidirectionnelle par Li-Fi et en ce que le luminaire comprend encore un composant optique spectralement sélectif entre les spectres visible et infrarouge, disposé en une intersection des deux chemins optiques, ce composant étant configuré de manière à transmettre le faisceau lumineux se propageant selon l'un desdits chemins optiques et à réfléchir l'autre faisceau lumineux se propageant selon l'autre desdits chemins optiques pour combiner les deux faisceaux lumineux visible et infrarouge entre le composant optique et la fenêtre d'éclairage.

Ainsi, du fait que les faisceaux lumineux visible et infrarouge se combinent entre le composant optique et la fenêtre d'éclairage, un usager reçoit dans une zone de la fenêtre d'éclairage située à l'aplomb d'un module Li-Fi d'émission/réception d'un signal infrarouge descendant ou montant, le faisceau de lumière visible réfléchi. Il ne perçoit donc aucune inhomogénéité de l'éclairage surfacique dans la fenêtre d'éclairage associée à cette zone de transmission de données bidirectionnelle

Dans un autre mode de réalisation de l'invention, le composant optique comprend un filtre optique ayant la propriété de laisser passer un faisceau lumineux dans le spectre infrarouge et de réfléchir un faisceau lumineux dans le spectre visible, le composant optique étant en particulier une lame dichroïque ou un miroir dichroïque. Le filtre est par exemple un filtre optique passe-haut qui réfléchit majoritairement un faisceau lumineux de longueur d'onde située en-dessous d'une longueur d'onde de coupure prédéfinie et transmet majoritairement un faisceau lumineux de longueur d'onde située au-dessus de la longueur d'onde de coupure. Par exemple, la longueur d'onde de coupure est supérieure à 750 nanomètres, par exemple égale à environ 780 nanomètres.

Dans un autre mode de réalisation de l'invention, le composant optique présente une surface structurée optiquement pour disperser des rayons optiques du faisceau lumineux réfléchi de manière à favoriser la redirection des rayons optiques vers la fenêtre d'éclairage.

Dans un autre mode de réalisation de l'invention, le luminaire forme un relais optique de transmission bidirectionnelle de données entre un module Li-Fi adapté à l'émission et/ou la réception d'un faisceau de lumière infrarouge modulé par des données à transmettre et un terminal distant, le luminaire délimite un emplacement, s'étendant à l'intérieur et/ou à l'extérieur du réceptacle configuré pour la réception du module Li-Fi, ledit emplacement étant disposé en amont du composant optique sur le deuxième chemin optique en considérant le sens descendant.

Dans un autre mode de réalisation de l'invention, le luminaire comprend un réflecteur agencé dans le réceptacle sur le premier chemin optique configuré pour réfléchir dans le spectre visible principalement en direction de la fenêtre d'éclairage, le composant optique s'étendant dans une région du réceptacle localisée sensiblement à l'intersection des deux chemins optiques de manière à ce que, dans cette région, le faisceau lumineux visible se propageant suivant le premier chemin optique soit réfléchi majoritairement par le composant optique et le faisceau lumineux infrarouge se propageant selon le deuxième chemin optique soit transmis majoritairement par le composant optique.

Dans un autre mode de réalisation de l'invention, le réceptacle ayant une forme générale de panneau, la source d'éclairage est disposée à l'intérieur du panneau pour éclairer au travers du panneau le long d'une tranche d'une paroi périphérique du panneau et le réflecteur forme une paroi dorsale du panneau avec laquelle le composant optique est couplé dans la région d'intersection.

Dans un autre mode de réalisation de l'invention, dans la région d'intersection, le réflecteur est pourvu localement d'un évidement configuré pour recevoir le composant optique.

Dans un autre mode de réalisation de l'invention, la source d'éclairage et le composant optique sont disposés sur une paroi dorsale du réceptacle, le réceptacle comprenant une surface interne essentiellement réfléchissante formant le réflecteur, de manière à ce que le premier chemin optique comprenne une pluralité de réflexions sur la surface interne réfléchissante du réceptacle en direction de la paroi dorsale et le deuxième chemin optique s'étende directement entre la paroi dorsale et la paroi frontale.

Dans un autre mode de réalisation de l'invention, le premier chemin optique est indirect avec une pluralité de réflexions optiques et le deuxième chemin optique est direct sans réflexion optique, par exemple en s'étendant de façon sensiblement rectiligne entre une paroi dorsale et une paroi frontale du luminaire.

Dans un autre mode de réalisation de l'invention, le composant optique est pourvu d'une surface réfléchissant la lumière visible et est agencé sur une paroi dorsale opposée à la paroi frontale, de sorte que le composant optique traverse l'épaisseur de la paroi dorsale et présente la surface du côté d'une face interne de la paroi dorsale.

Dans un autre mode de réalisation de l'invention, le luminaire comprend un diffuseur pour diffuser la lumière visible au travers de la fenêtre d'éclairage, étant localement ajouré dans une zone d'intersection du diffuseur avec le deuxième chemin optique.

L'invention a encore pour objet un ensemble de communication de données par Li-Fi comprenant un luminaire selon l'invention et un module Li-Fi adapté à l'émission et/ou la réception d'un faisceau de lumière infrarouge modulé par des données à transmettre comprenant un élément connecteur de raccordement du module à un réseau de communication externe, tel que le réseau Internet, caractérisé en ce que le module Li-Fi s'étend en amont du composant optique suivant le deuxième chemin optique en considérant un sens descendant entre le module Li-Fi en direction d'un terminal distant.

D'autres caractéristiques et avantages de l'invention apparaîtront à la lumière de la description qui suit, faite en référence aux dessins annexés dans lesquels :
[Fig 1] : la figure 1 représente un schéma fonctionnel d'une architecture Li-Fi comprenant un ensemble de communication Li-Fi selon l'invention ;
[Fig 2] : la figure 2 est une vue en perspective d'une face frontale d'un luminaire selon un premier mode de réalisation de l'invention de l'ensemble de communication Li-Fi de la figure 1 ;
[Fig 3] : la figure 3 est une vue en perspective de dessous du luminaire de la figure 2 et d'un module Li-Fi pour former l'ensemble de communication Li-Fi selon l'invention ;
[Fig 4] : la figure 4 est une vue en perspective et à l'état démonté du luminaire des figures 2 et 3 ;
[Fig 5] : la figure 5 est une vue schématique et en perspective illustrant le principe de fonctionnement d'un guide de lumière du luminaire selon le premier mode de réalisation de l'invention ;
[Fig 6] : la figure 6 est une vue en coupe du luminaire de la figure 1 ;
[Fig 7] : la figure 7 illustre schématiquement le principe de fonctionnent d'un composant optique du luminaire selon le premier mode de réalisation de l'invention ;
[Fig 8] : la figure 8 illustre schématiquement à échelle agrandie le principe de fonctionnement du composant optique du luminaire selon le premier mode de réalisation de l'invention ;
[Fig 9] : la figure 9 est une vue en coupe d'un luminaire selon un deuxième mode de réalisation de l'invention.

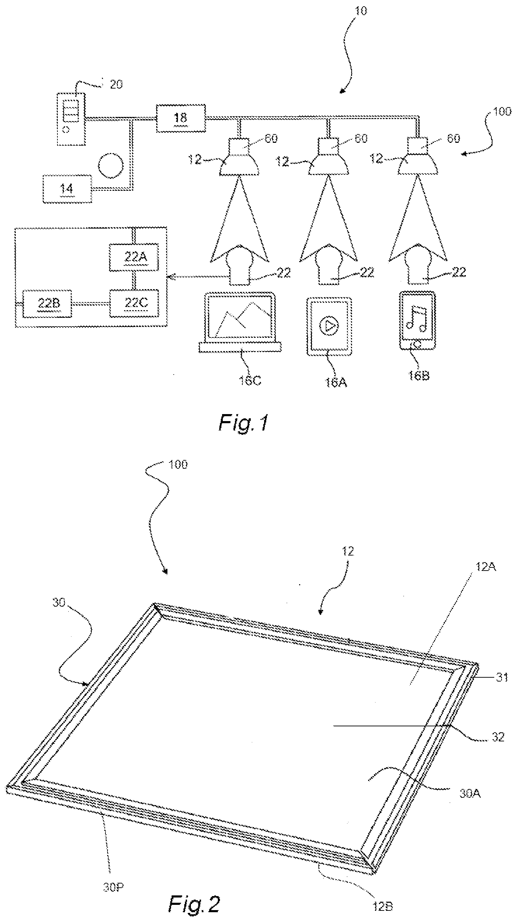

On a représenté de façon schématique sur **la** **figure 1** une architecture Li-Fi de communication Li-Fi comprenant un ensemble de communication Li-Fi selon l'invention pour la transmission de données par la lumière avec un terminal distant. Cette architecture Li-Fi est désignée par la référence générale 10 et l'ensemble de communication est désigné par la référence générale 100.

Au sens de la présente invention, on entendra par « chemin optique », le ou les trajets selon lesquels peut se propager un faisceau lumineux dans un système optique entre deux points. Le chemin est dit direct lorsque le faisceau lumineux n'est pas réfléchi et le chemin est dit indirect lorsque le faisceau lumineux subit une ou plusieurs réflexions.

L'ensemble de communication 100 comprend un luminaire 12 et un module Li-Fi 60 qui seront décrits de façon détaillée par la suite.

Sur **la** **figure 1****,** on a représenté trois luminaires 12. Dans la suite de la description, on ne décrira qu'un seul des trois luminaires.

Conformément à l'invention, le luminaire 12 fait partie de l'ensemble 100 de communication sans fil connectable à un réseau de télécommunication 14. Le réseau de télécommunication 14 peut comprendre un réseau Internet, un réseau Intranet, un réseau Ethernet ou tout autre type de réseau de communication.

Dans cet exemple, le réseau de télécommunication est le réseau Internet et le protocole de communication réseau est le protocole de communication TCP/IP.

De façon connue en soi, le réseau Internet est un réseau informatique mondial représentant l'interconnexion entre une pluralité de serveurs distants. Le réseau Internet 14 peut comprendre une pluralité de services associés tels qu'un service Web, un service de messagerie, un service de partage de fichiers poste à poste, un service de visioconférence. Généralement, ces différents services communiquent par exemple avec le protocole TCP/IP.

Bien entendu, en variante, l'ensemble de communication sans fil 100 peut être connecté à un réseau Intranet local représenté par un serveur local 20 sur **la** **figure 1****.**

Le terminal distant 16 est dans l'exemple décrit une tablette électronique 16A. En variante, le terminal distant 16 peut être un téléphone portable 16B, ou un ordinateur de travail 16C, etc.

Dans l'exemple décrit, l'ensemble de communication 100 est propre à opérer la communication de données avec le terminal distant 16 selon un débit théorique supérieur à un gigabits par seconde, de préférence supérieur à sept gigabits par seconde.

Généralement, comme cela est illustré très schématiquement sur l'exemple de **la** **figure 1****,** chaque terminal distant 16 est équipé d'une clé LIFI 22 (désignée en anglais par la terminologie « dongle »). La clé Li-Fi 22 comprend dans l'exemple illustré un photorécepteur 22A pour la réception d'un signal de données en provenance des luminaires 12, une unité 22B d'émission d'un signal de données généré à partir du terminal 14 et une unité 22C de traitement des signaux de données émis ou reçus.

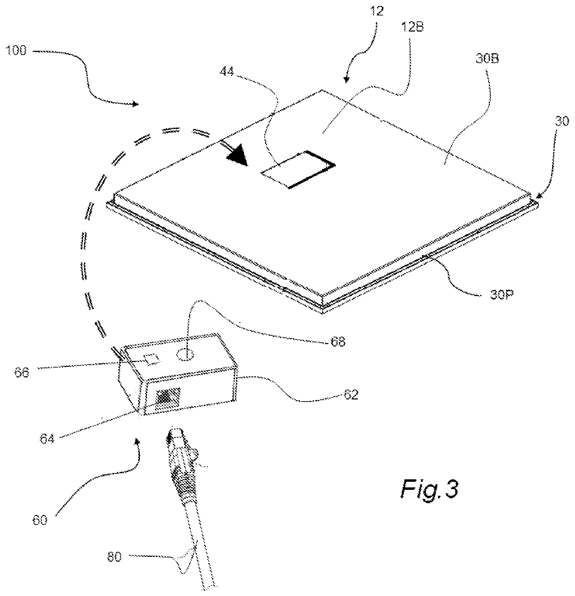

On va maintenant décrire plus en détail l'ensemble de communication sans fil 100 représenté sur **la** **figure 3****.** Cet ensemble 100 comprend un luminaire 12 selon un premier mode de réalisation et un module Li-Fi 60.

On a représenté en détail sur **les** **figures 2 à 5****,** le luminaire 12 selon un premier mode de réalisation de l'invention. Ce luminaire 12 comprend un réceptacle 30 délimitant les dimensions extérieures du luminaire. Ce luminaire 12 est pourvu à l'avant d'une paroi frontale 30A comprenant une fenêtre d'éclairage 32 et une source lumineuse d'éclairage 34 dans le spectre visible, logée à l'intérieur du réceptacle 30.

Dans l'exemple illustré, le luminaire 12 est un panneau d'éclairage et le réceptacle 30 délimite les dimensions extérieures du luminaire 12 suivant une forme générale de quadrilatère, par exemple carré ou rectangulaire. Dans une variante non illustrée, le luminaire 12 peut présenter un facteur de forme différent d'une dalle lumineuse ou panneau et le réceptacle peut présenter une forme générale cylindrique, tubulaire, etc, sans sortir du cadre de l'invention.

Dans l'exemple illustré, le panneau 12 comprend une face avant 12A d'éclairage destinée à être orientée vers le sol et une face arrière 12B destinée à être orientée vers le support auquel le panneau 10 est destiné à être fixé, par exemple un plafond.

Dans cet exemple, le panneau 12 comprend encore à l'arrière une paroi dorsale 30B opposée à la paroi frontale 30A qui est généralement soit destinée à s'étendre à l'intérieur d'une ouverture de faux-plafond soit destinée à être fixée directement sur le plafond, soit encore suspendue par des filins. Par ailleurs, le panneau 10 comprend encore une paroi périphérique ou bord périphérique 30P reliant entre elles les deux parois frontale 30A et dorsale 30B. Ainsi, dans l'exemple illustré, le réceptacle 30 du panneau 12 délimite un boîtier par exemple de forme générale carrée.

Au sens de la présente invention, on entend par panneau ou dalle un produit donc la largeur et la longueur sont du même ordre de grandeur, cet ordre de grandeur étant bien supérieur à celui de la hauteur. Le panneau peut éventuellement présenter des faces avant arrières bombées, concaves ou convexes. Dans l'exemple illustré le panneau 12 a une forme générale carrée mais bien entendu le panneau peut être en variante indifféremment de forme ronde, ovale, rectangulaire ou polygonale.

Dans l'exemple illustré, la paroi périphérique 30P du réceptacle 30 comprend un cadre périphérique 31 en aluminium, par exemple formé par la réunion de profilés en aluminium.

Selon l'invention, le luminaire 12 définit, à l'intérieur du réceptacle 30 entre la source d'éclairage 34 et la fenêtre d'éclairage 32, un premier chemin optique C1 de propagation d'un faisceau de lumière visible V, émis par la source d'éclairage 34.

Par lumière visible, on entend au sens de l'invention, une lumière de longueurs d'onde comprises entre environ 450 nanomètres et 750 à 800 nanomètres.

Sur **la** **figure 2****,** on voit que la paroi frontale 30A délimite globalement la fenêtre d'éclairage 32 selon une forme générale de plaque.

Dans le mode de réalisation préféré de l'invention, le premier chemin optique C1 est un chemin optique indirect ou réfléchi et comprend au moins une réflexion optique.

Ainsi, de préférence, le luminaire 12 comprend un réflecteur 40 agencé dans le réceptacle 30 sur le premier chemin optique C1 et pourvu d'une surface réfléchissante interne 42 au réceptacle 30 configurée pour réfléchir dans le spectre visible majoritairement en direction de la fenêtre d'éclairage 34. Dans l'exemple illustré, le réflecteur 40 a une forme générale de plaque et forme la paroi dorsale 30B du panneau 12.

Sur **la** **figure 3****,** de préférence, la source d'éclairage 34 est disposée à l'intérieur du panneau 12 pour éclairer au travers du panneau 12 le long d'une tranche d'une paroi périphérique 30P du panneau 12.

En outre, le luminaire 12 comprend ensuite suivant le premier chemin optique C1, en amont du réflecteur 40, un guide 50 pour guider le faisceau lumineux V émis par la source d'éclairage 34 selon une direction transversale du panneau 12 par réflexions multiples à l'intérieur du guide 50 et configurée pour permettre la sortie de la lumière du guide 50 en direction du réflecteur 40.

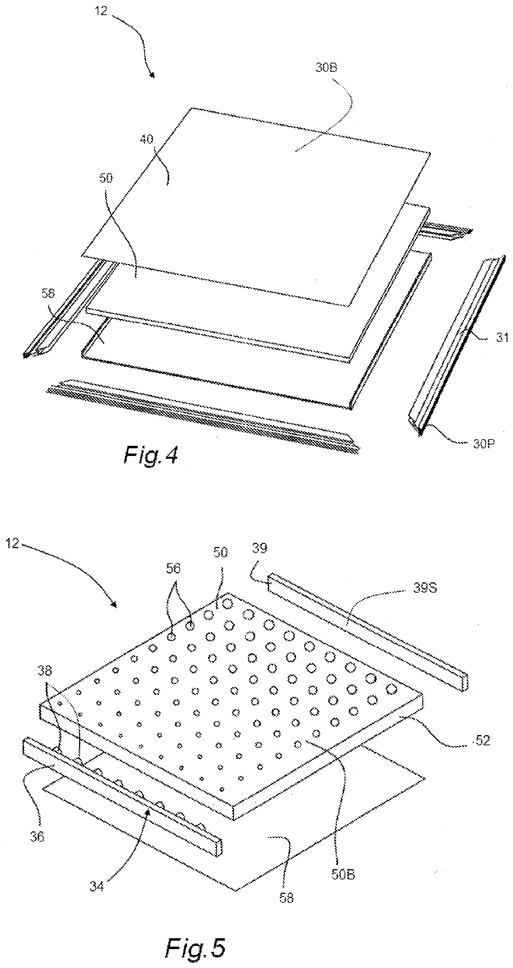

De préférence, le guide 50 se présente par exemple sous la forme d'une plaque de guidage. De préférence, la source d'éclairage 34 comprend une pluralité de diodes électroluminescentes 38, disposées par exemple sous forme d'une ou plusieurs barrettes 36 de diodes électroluminescentes 38, telle que celle représentée sur **la** **figure 5****.** La barrette de diodes 36 peut être par exemple disposée sur une tranche du bord périphérique 30P du panneau 12.

Par exemple, le panneau 12 peut comprendre une seule barrette 36 de diodes électroluminescentes 38. Dans ce cas, en vis-à-vis de la barrette 36 de diodes électroluminescentes 38, une bande réfléchissante 39S est apposée par exemple par collage sur la tranche opposée 39 du panneau 12.

Eventuellement, le panneau 12 peut comporter plus d'une barrette de diodes électroluminescentes, par exemple deux barrettes disposées sur deux côtés opposées du panneau 12.

En outre, par exemple, afin de permettre la sortie de lumière hors du guide 50, de préférence, la plaque de guidage 50 comprend toute une série de points 56 de sortie de lumière qui sont répartis sur une face 50B de la plaque de guidage 50 disposée en regard du réflecteur 40. Cette série de points présente par exemple une répartition sous forme d'un réseau formé sur une des faces de la plaque de guidage 50, ici la face dorsale 50B.

Avantageusement, la répartition des points 56 est telle que la lumière qui sort de la plaque de guide optique 50 présente une intensité homogène sur la totalité de la surface du panneau 12.

Ces points 56 peuvent être par exemple formés par des ouvertures pratiquées dans la plaque de guidage 50 ou par des rayures ou par n'importe quelles irrégularités permettant une sortie du guide de lumière 50. La lumière émise le long d'une des tranches de la plaque de guidage 50 est guidée à l'intérieur du guide optique par réflexions multiples et apte à sortir de la plaque de guidage 50 au travers de ces points 56.

Cette série de points 56 peut par exemple être formée par un revêtement polymère flexible collé directement sur une des faces 50B de la plaque de guidage 56. Dans ce cas la répartition des points 56 pourra être symétrique par rapport à un plan vertical comprenant un axe passant par le milieu du panneau 12, dans le but d'assurer une répartition globalement homogène de l'intensité lumineuse.

On peut par exemple prévoir des points qui sont plus petits à proximité de la source d'éclairage 34 et plus grands à mesure que l'on s'en éloigne comme représenté très schématiquement sur **la** **figure 5****.** En variante on peut faire varier seulement la densité de points de sortie de lumière et non plus la dimension des points.

Comme cela ressort de la description détaillée du luminaire 12, dans ce mode de réalisation préféré de l'invention, le premier chemin optique C1 est indirect car le faisceau lumineux visible V subit plusieurs réflexions, notamment à l'intérieur du guide 50 (réflexions multiples sur des parois internes du guide) et sur la surface interne réfléchissante 42 du réflecteur 40.

De préférence, le luminaire 12 comprend encore un diffuseur 58, par exemple s'étendant sensiblement au niveau de la fenêtre d'éclairage 32 pour apporter encore une amélioration de l'homogénéité de l'éclairage en lumière visible.

Par ailleurs, de façon avantageuse, ce luminaire 12 forme un relais optique de transmission bidirectionnelle de données entre le module Li-Fi 60 adapté à l'émission et/ou la réception d'un faisceau de lumière infrarouge IR modulé par des données à transmettre selon la technologie Li-Fi et un terminal distant 16. Le principe de la technologie Li-Fi repose de façon bien connue en soi sur le codage et l'envoi de données via la modulation d'amplitude d'une source de lumineuse infrarouge ou visible (scintillation imperceptible à l'œil), selon un protocole bien défini et standardisé.

Au sens de la présente invention, on entend par lumière infrarouge, une lumière avec des longueurs d'onde comprises dans le spectre de rayonnement de proche infrarouge compris par exemple entre environ 700 à 1000 nanomètres jusqu'à 2500 nanomètres.

Conformément à l'invention, ce module Li-Fi 60 est adapté à l'émission et/ou la réception d'un faisceau de lumière infrarouge IR modulé par des données à transmettre selon un signal descendant en provenance du réseau de télécommunication 14 vers le terminal distant 16 ou selon un signal montant en provenance du terminal distant 16 vers le réseau de télécommunication 14. Le faisceau lumineux infrarouge IR comprend des longueurs d'onde supérieures par exemple à 850 nanomètres et de préférences comprises entre 850 nanomètres et 950 nanomètres.

Dans l'exemple illustré sur la figure, le module Li-Fi 60 se présente sous la forme d'un boîtier 62 comprenant un élément connecteur 64 de raccordement au réseau de télécommunication, par exemple une prise RJ45 référencée 80.

Ce module Li-Fi 60 comprend encore un émetteur 68 d'un signal modulé par des données à transmettre comprenant par exemple une source lumineuse émettant dans le spectre infrarouge. Le module Li-Fi 60 comprend également un récepteur 66 d'un signal modulé par des données à transmettre comprenant un photorécepteur 66 sensible à la lumière infrarouge.

De façon générale, le module générique Li-Fi 60 comporte une carte électronique sur laquelle sont montés un certain nombre de composants électroniques regroupés en un module de réception Li-Fi pour former le récepteur Li-Fi 66, un module d'émission Li-Fi pour former l'émetteur Li-Fi 68 et encore un module de traitement (non représenté) des signaux de données. Un tel module de traitement permet, dans cet exemple, de traiter des signaux de données dit montant ou descendant, selon au moins un protocole de communication du réseau de télécommunication.

A cet effet, conformément à l'invention, le luminaire 12 définit un deuxième chemin optique C2 de propagation d'un faisceau de lumière infrarouge IR à l'intérieur du réceptacle 30 jusqu'à la fenêtre d'éclairage 32 pour former une voie optique de transmission de données bidirectionnelle par Li-Fi au travers du réceptacle 30 du luminaire 12.

De préférence, ce deuxième chemin optique C2 est direct, c'est-à-dire qu'il suit globalement une trajectoire selon une direction rectiligne, par exemple s'étendant entre la paroi dorsale 30B et la paroi frontale 30A du panneau 12.

En particulier, le luminaire 12 comprend encore un composant optique 70 spectralement sélectif entre les spectres visible et infrarouge, disposé en une intersection I des deux chemins optiques C1 et C2.

Ce composant 70 est configuré de manière à transmettre le faisceau lumineux V ou IR se propageant selon l'un desdits chemins optiques respectivement C1 ou C2 et à réfléchir l'autre faisceau lumineux IR ou V se propageant selon l'autre desdits chemins optiques respectivement C2 ou C1 pour combiner les deux faisceaux lumineux visible V et infrarouge IR entre le composant optique 70 et la fenêtre d'éclairage 32.

De préférence, le composant optique 70 comprend un filtre optique passe-haut configuré pour laisser passer un faisceau lumineux IR dans le spectre infrarouge et réfléchir un faisceau lumineux V dans le spectre visible. Par exemple, le filtre optique passe-haut 70 a une longueur d'onde de coupure comprise entre environ 770 nanomètres et 800 nanomètres.

De préférence, le composant optique 70 se présente sous la forme d'une lame dichroïque ou d'un miroir dichroïque. Le composant 70 présente par exemple une surface structurée optiquement 72 pour disperser des rayons optiques du faisceau lumineux réfléchi V de manière à favoriser la redirection des rayons optiques visibles vers la fenêtre d'éclairage 32.

Le composant 70 est agencé de préférence sur la paroi dorsale 30B du luminaire 12. Par exemple, le composant 70 est agencé sur la paroi dorsale 30B de façon à présenter la surface réfléchissante 72 du côté d'une face interne de la paroi dorsale 30B. De préférence, le composant 70 s'étend sur toute l'épaisseur de la paroi dorsale 30B de manière à traverser intégralement l'épaisseur de la paroi dorsale 30B. La paroi dorsale 30 est dans ce cas opaque à la lumière infrarouge et à la lumière visible et le composant optique 70 délimite une région de la paroi dorsale 30B laisser passer la lumière infrarouge depuis l'extérieur du réceptacle 30 vers l'intérieur du réceptacle 30.

De préférence, le module Li-Fi 60 s'étend en amont du composant optique 70 suivant le deuxième chemin optique C2 en considérant un sens descendant entre le module Li-Fi 60 en direction d'un terminal distant. Par exemple, le module Li-Fi 60 est disposé sur la paroi dorsale 30B du côté d'une face externe à la paroi dorsale 30B à l'aplomb du composant optique 70. Dans cette disposition, le module Li-Fi 60 est invisible de l'usager lorsque ce dernier regarde en direction de la paroi frontale 30A du luminaire 12.

En variante non illustrée, il est possible d'envisager l'intégration du module Li-Fi 60 à l'intérieur du réceptacle 30, le module Li-Fi 60 devant alors être agencé de manière à ce qu'au moins la prise 64 reste accessible depuis l'extérieur du réceptacle 30.

Dans le premier mode de réalisation de l'invention, le composant optique 70 s'étendant dans une région 44 du réceptacle 30 localisée sensiblement à l'intersection I des deux chemins optiques C1, C2 . Par conséquent, dans cette région 44, le faisceau lumineux visible V se propageant suivant le premier chemin optique C1 soit réfléchi majoritairement par le composant optique 70 et le faisceau lumineux infrarouge IR se propageant selon le deuxième chemin optique C2 soit transmis majoritairement par le composant optique 70.

Par exemple, dans la région d'intersection 44, le réflecteur 40 est pourvu localement d'un évidement configuré pour recevoir le composant optique 70.

De préférence, dans ce premier mode de réalisation préféré de l'invention, le diffuseur 58 est localement ajouré dans une zone 59 d'intersection du diffuseur 58 avec le deuxième chemin optique C2. Ceci permet de perturber le moins possible le faisceau lumineux infrarouge porteur de données tout en ayant aucun effet sur l'apparence d'homogénéité du panneau surfacique. L'interruption d'une portion de diffusion localement sur le diffuseur 58 n'est pas perceptible à l'œil nu dans les conditions normales d'utilisation du luminaire 12. Toutefois, il est souhaitable de prévoir une couche transparente au spectre visible et au spectre infrarouge venant revêtir l'extérieur du diffuseur 58 pour le rendre étanche aux impuretés et poussières.

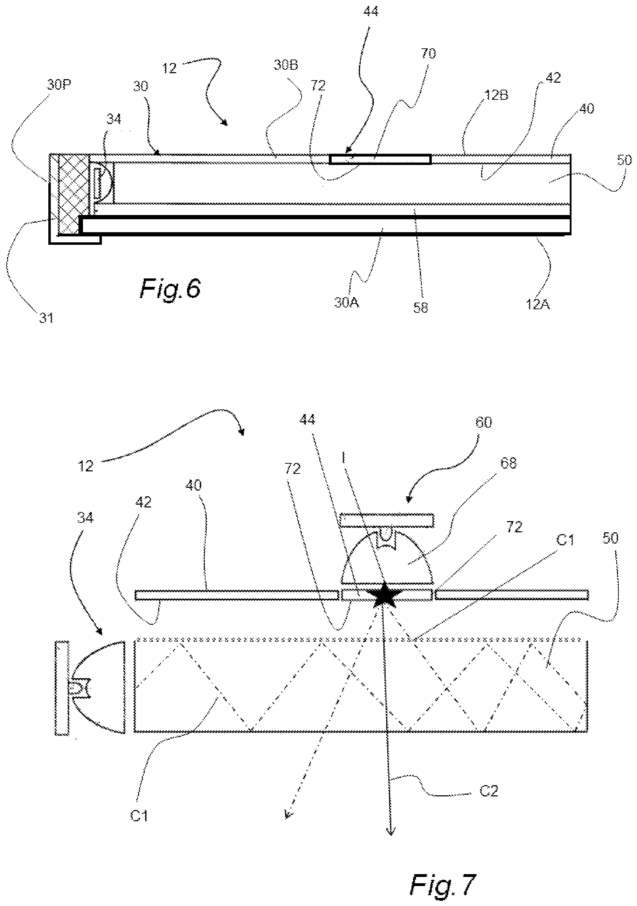

Toutefois, de préférence, comme cela est représenté sur **la** **figure 6** qui illustre une vue en coupe du panneau 12, la paroi frontale 30A comprend une vitre transparente dans le spectre infrarouge et dans le spectre visible, ceci afin de former un boîtier fermé étanche au dépôts de saletés ou poussières sur les organes intérieurs au luminaire 12.

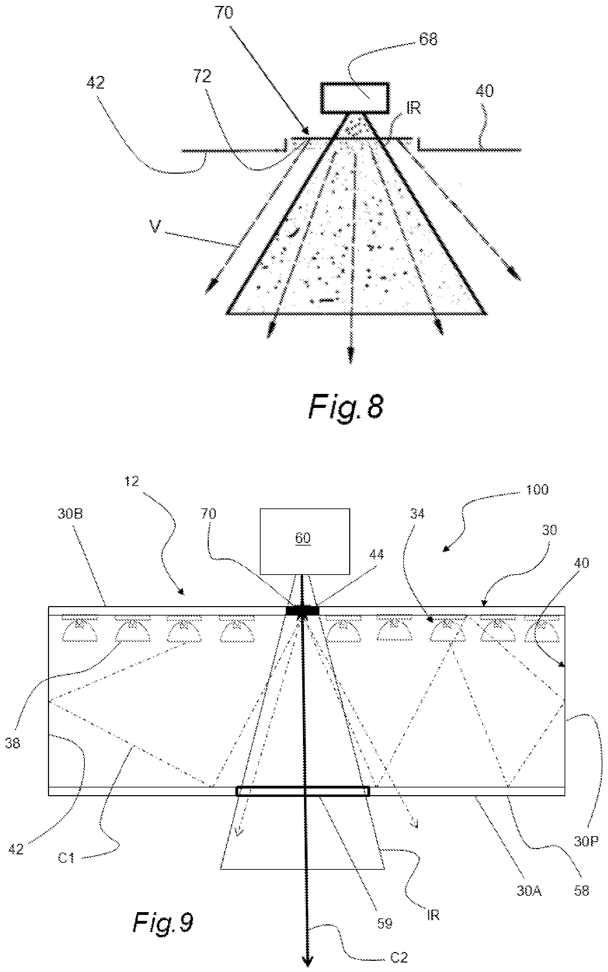

On a représenté sur **la** **figure 9** un luminaire selon un deuxième mode de réalisation de l'invention. Dans ce deuxième mode de réalisation, les éléments analogues au premier mode de réalisation portent des références identiques.

Comme cela est illustré sur **la** **figure 9****,** le luminaire 12 comprend un réceptacle 30 pourvu d'une paroi dorsale 30B et d'une paroi frontale 30A opposée ainsi qu'une paroi périphérique 30P. La paroi frontale 30A délimite globalement une fenêtre d'éclairage 32.

En particulier, le réceptacle 30 délimite les dimensions extérieures du luminaire 12 qui a par exemple une forme parallélépipédique en forme de dalle. Toutefois, la paroi périphérique 30P peut avoir une forme annulaire ou encore présenter d'autres géométries.

Par exemple, la paroi dorsale 30B et la paroi frontale 30A sont reliées entre elles par cette paroi périphérique 30P. On comprend donc que les parois dorsale 30B et frontale 30A peuvent présenter une forme générale correspondant à la section de la paroi périphérique 30P selon une direction transversale à cette paroi 30P.

En outre, dans l'exemple illustré, la paroi frontale 30A comprend un diffuseur 58.

Le luminaire 12 comprend encore une source d'éclairage 34 agencée à l'intérieur du réceptacle 30. La source d'éclairage 34 comprend une pluralité de diodes électroluminescentes 38, se présentant par exemple sous forme d'une ou plusieurs barrettes de diodes 38.

Dans ce deuxième mode de réalisation, la source d'éclairage 34 est disposée sur une face interne de la paroi dorsale 30B. En outre, dans ce deuxième mode de réalisation, au moins une face intérieure du réceptacle 30 réfléchit la lumière visible. De préférence, le réceptacle 30 comprend une surface interne essentiellement réfléchissante 42 formant le réflecteur 40. Par exemple, le réceptacle 30 est réalisé dans un matériau métallique réfléchissant la lumière visible.

Le réceptacle 30 se comporte à l'intérieur de son volume comme un réflecteur multidirectionnel de la lumière visible émise par la source d'éclairage 34, principalement par un phénomène de diffusion multidirectionnelle de la lumière émise par la source d'éclairage 34. Par exemple, chaque diode électroluminescente 38 peut comprendre une optique primaire diffusant la lumière émise par chacune des diodes de façon multidirectionnelle qui vient se réfléchir sur les faces internes du réceptacle 30.

On comprendra bien que, dans ce deuxième mode de réalisation, il est possible que des faisceaux de lumière visible se propagent de façon rectiligne entre la paroi dorsale 30B et la paroi frontale 30A. Toutefois, une proportion non négligeable des faisceaux de lumière visible émis par la source d'éclairage 34 subit des réflexions multiples sur la surface interne 42 du réceptacle 30 et en particulier en direction de la paroi dorsale 30B.

Ainsi, dans ce deuxième mode de réalisation, le premier chemin optique C1 comprend une pluralité de réflexions sur la surface interne réfléchissante 42 du réceptacle 30 en direction de la paroi dorsale 30B. Le réflecteur 40 est ainsi agencé dans le réceptacle 30 sur le premier chemin optique C1 et est configuré pour réfléchir dans le spectre visible principalement en direction de la fenêtre d'éclairage 32.

Tout comme dans le premier mode de réalisation, de préférence, le composant optique 70 est agencé sur une paroi dorsale 30B du luminaire 12. Le composant optique 70 présente sa surface réfléchissante 72 orientée sensiblement parallèlement à la face intérieure de la paroi dorsale 30B. Cette surface réfléchissante 72 se comporte globalement comme un miroir réfléchissant la lumière visible. Le composant optique s'étend de préférence sur toute l'épaisseur de la paroi dorsale 30B de telle sorte que dans la région 44, la paroi dorsale 30B peut être traversée par une lumière infrarouge passant au travers du composant optique 70.

Ainsi, dans cet exemple, le deuxième chemin optique C2 s'étend directement selon une direction sensiblement rectiligne entre la paroi dorsale 30B et la paroi frontale 30A de sorte que l'intersection des deux chemins optiques C1 et C2 se situe au niveau de la paroi dorsale 30B.

Le composant optique 70 s'étend dans l'exemple de **la** **figure 9** dans la région 44 du réceptacle 30 localisée sensiblement à l'intersection (représentée par une étoile) des deux chemins optiques C1, C2 de manière à ce que, dans cette région 44, le faisceau lumineux visible V se propageant suivant le premier chemin optique C1 soit réfléchi majoritairement par le composant optique 70 et le faisceau lumineux infrarouge IR se propageant selon le deuxième chemin optique C2 soit transmis majoritairement par le composant optique 70.

Par exemple, le composant optique 70 est agencé sur la paroi dorsale 30B dans un espace dépourvu de diodes électroluminescentes 38 de la source d'éclairage 34.

On notera que bien que dans les deux modes de réalisation décrits, le composant optique 70 est agencé localement sur une paroi du réceptacle 30, il peut s'étendre de façon extensive sur toute une paroi du réceptacle et former par exemple la totalité du réflecteur 40.

Il va être succinctement décrit le principe de fonctionnement de l'ensemble de communication selon l'un des deux modes de réalisation de l'invention.

On comprend bien que l'invention permet d'intégrer une technologie Li-Fi dans un luminaire sans nuire à la qualité de l'homogénéité de l'éclairage et la perception globale du luminaire par un usager.

Ainsi, le module Li-Fi 60 en étant monté par exemple à l'arrière du luminaire 12, par exemple sur la paroi dorsale 30B, émet et reçoit un faisceau lumineux infrarouge pouvant traverser le réceptacle 30 à l'endroit du composant optique 70. Comme la surface interne 72 de ce composant optique 70 réfléchit la lumière visible, l'usager ne perçoit aucune différence d'éclairage lié à la présence du module Li-Fi 60.

L'invention ne se limite pas aux modes de réalisation précédemment décrits. D'autres modes de réalisation à la portée de l'homme du métier peuvent aussi être envisagés sans sortir du cadre de l'invention définie par les revendications ci-après. C'est ainsi, notamment que l'on ne s'éloignerait pas du cadre de l'invention en modifiant la forme de détail du luminaire.

## Revendications

1. Luminaire (12) adapté pour la transmission de données bidirectionnelle par Li-Fi, le luminaire (12) étant destiné à former un relais optique de transmission bidirectionnelle de données entre un module Li-Fi (60) adapté à l'émission et/ou la réception d'un faisceau de lumière infrarouge (IR) modulé par des données à transmettre selon la technologie Li-Fi et un terminal distant (16), le luminaire comprenant un réceptacle (30) délimitant les dimensions extérieures du luminaire (12) pourvu d'une paroi frontale (30A) comprenant une fenêtre d'éclairage (32) et une source lumineuse d'éclairage (34) dans le spectre visible, le luminaire (12) définit un premier chemin optique (C1) de propagation d'un faisceau de lumière visible (V) à l'intérieur du réceptacle (30) entre la source d'éclairage (34) et la fenêtre d'éclairage (32), **caractérisé en ce que** le luminaire (12) définit un deuxième chemin optique (C2) de propagation d'un faisceau de lumière infrarouge (IR) à l'intérieur du réceptacle (30) jusqu'à la fenêtre d'éclairage (32) pour former une voie de transmission de données bidirectionnelle par Li-Fi **et en ce que** le luminaire (12) comprend encore un composant optique (70) spectralement sélectif entre les spectres visible et infrarouge, disposé en une intersection (I) des deux chemins optiques (C1, C2), ce composant optique (70) étant configuré de manière à transmettre le faisceau lumineux (IR, V) se propageant selon l'un desdits chemins optiques (C2, C1) et à réfléchir l'autre faisceau lumineux (V, IR) se propageant selon l'autre desdits chemins optiques (C1, C2) pour combiner les deux faisceaux lumineux visible (V) et infrarouge (IR) entre le composant optique (70) et la fenêtre d'éclairage (32).

2. Luminaire (12) selon la revendication principale, dans lequel le composant optique (70) comprend un filtre optique ayant la propriété de laisser passer un faisceau lumineux (IR) dans le spectre infrarouge et de réfléchir un faisceau lumineux (V) dans le spectre visible, le composant optique (70) étant en particulier une lame dichroïque ou un miroir dichroïque.

3. Luminaire (12) selon l'une quelconque des revendications précédentes, dans lequel le composant optique (70) présente une surface structurée optiquement (72) pour disperser des rayons optiques du faisceau lumineux réfléchi (V, IR) de manière à favoriser la redirection des rayons optiques vers la fenêtre d'éclairage (34).

4. Luminaire (12) selon l'une quelconque des revendications précédentes, formant un relais optique de transmission bidirectionnelle de données entre un module Li-Fi (60) adapté à l'émission et/ou la réception d'un faisceau de lumière infrarouge (IR) modulé par des données à transmettre et un terminal distant (16), le luminaire (12) délimite un emplacement, s'étendant à l'intérieur et/ou à l'extérieur du réceptacle (30) configuré pour la réception du module Li-Fi (60), ledit emplacement étant disposé en amont du composant optique (70) sur le deuxième chemin optique (C2) en considérant le sens descendant.

5. Luminaire (12) selon l'une quelconque des revendications précédentes, dans lequel le composant optique (70) est pourvu d'une surface (72) réfléchissant la lumière visible et est agencé sur une paroi dorsale (30B) opposée à la paroi frontale (30A), de sorte que le composant optique (70) traverse l'épaisseur de la paroi dorsale (30B) et présente la surface (72) du côté d'une face interne de la paroi dorsale (30B).

6. Luminaire (12) selon l'une quelconque des revendications précédentes, comprenant un réflecteur (40) agencé dans le réceptacle (30) sur le premier chemin optique (C1) configuré pour réfléchir dans le spectre visible principalement en direction de la fenêtre d'éclairage (32), le composant optique (70) s'étendant dans une région (44) du réceptacle (30) localisée sensiblement à l'intersection (I) des deux chemins optiques (C1, C2) de manière à ce que, dans cette région (44), le faisceau lumineux visible (V) se propageant suivant le premier chemin optique (C1) soit réfléchi majoritairement par le composant optique (70) et le faisceau lumineux infrarouge (IR) se propageant selon le deuxième chemin optique (C2) soit transmis majoritairement par le composant optique (70).

7. Luminaire (12) selon la revendication précédente, dans lequel le réceptacle (30) ayant une forme générale de panneau, la source d'éclairage (34) est disposée à l'intérieur du panneau (12) pour éclairer au travers du panneau (12) le long d'une tranche d'une paroi périphérique (30P) du panneau (12) et le réflecteur (40) forme une paroi dorsale (30B) du panneau (12) avec laquelle le composant optique (70) est couplé dans la région d'intersection (44).

8. Luminaire (12) selon la revendication 6, dans lequel la source d'éclairage (34) et le composant optique (70) sont disposés sur une paroi dorsale (30B) du réceptacle (30), le réceptacle (30) comprenant une surface interne essentiellement réfléchissante (42) formant le réflecteur (40), de manière à ce que le premier chemin optique (C1) comprenne une pluralité de réflexions sur la surface interne réfléchissante (42) du réceptacle (30) en direction de la paroi dorsale (30B) et le deuxième chemin optique (C2) s'étende directement entre la paroi dorsale (30B) et la paroi frontale (C1).

9. Luminaire (12) selon l'une quelconque des revendications précédentes, dans lequel le premier chemin optique (C1) est indirect avec une pluralité de réflexions optiques et le deuxième chemin optique (C2) est direct sans réflexion optique, par exemple en s'étendant de façon sensiblement rectiligne entre une paroi dorsale (30B) et une paroi frontale (30A) du luminaire (12).

10. Luminaire (12) selon l'une quelconque des revendications précédentes, comprenant un diffuseur (58) pour diffuser la lumière visible au travers de la fenêtre d'éclairage (32), étant localement ajouré dans une zone d'intersection du diffuseur (58) avec le deuxième chemin optique (C2).

11. Ensemble (100) de communication de données par Li-Fi comprenant un luminaire (12) selon l'une quelconque des revendications précédentes et un module Li-Fi (60) adapté à l'émission et/ou la réception d'un faisceau de lumière infrarouge (IR) modulé par des données à transmettre comprenant un élément connecteur (64) de raccordement du module à un réseau de communication externe, tel que le réseau Internet, **caractérisé en ce que** le module Li-Fi (60) s'étend en amont du composant optique (70) suivant le deuxième chemin optique (C2) en considérant un sens descendant entre le module Li-Fi (60) en direction d'un terminal distant (16).

## Patentansprüche

1. Leuchte (12), die für die bidirektionale Datenkommunikation über Li-Fi geeignet ist, wobei die Leuchte (12) dazu bestimmt ist, ein optisches Relais für die bidirektionale Datenübertragung zwischen einem Li-Fi-Modul (60), das zum Senden und/oder Empfangen eines mit den zu übertragenden Daten gemäß der Li-Fi-Technologie modulierten Infrarotlichtstrahls (IR) geeignet ist, und einem entfernten Endgerät (16) zu bilden, wobei die Leuchte ein Gehäuse (30) umfasst, das die Außenabmessungen der Leuchte (12) begrenzt und mit einer Vorderwand (30A) versehen ist, die ein Beleuchtungsfenster (32) und eine Beleuchtungslichtquelle (34) im sichtbaren Spektrum umfasst, wobei die Leuchte (12) einen ersten optischen Weg (C1) für die Ausbreitung eines sichtbaren Lichtstrahls (V) im Inneren des Gehäuses (30) zwischen der Lichtquelle (34) und dem Beleuchtungsfenster (32) definiert, **dadurch gekennzeichnet, dass** die Leuchte (12) einen zweiten optischen Weg (C2) für die Ausbreitung eines Infrarotlichtstrahls (IR) im Inneren des Behälters (30) bis zum Beleuchtungsfenster (32) definiert, um einen bidirektionalen Datenkommunikationsweg über Li-Fi zu bilden, **und dass** die Leuchte (12) außerdem eine optische Komponente (70) umfasst, die zwischen dem sichtbaren und dem Infrarotspektrum spektral selektiv ist und an einem Schnittpunkt (I) der beiden optischen Pfade (C1, C2) angeordnet ist, wobei diese Komponente (70) so konfiguriert ist, dass sie den Lichtstrahl (IR, V), der sich entlang eines der optischen Pfade ausbreitet (C2, C1) ausbreitet, und den anderen Lichtstrahl (V, IR), der sich entlang dem anderen der optischen Wege (C1, C2) ausbreitet, zu reflektieren, um den sichtbaren (V) und den infraroten (IR) Lichtstrahl zwischen der optischen Komponente (70) und dem Beleuchtungsfenster (32) zu kombinieren.

2. Leuchte (12) gemäß dem Hauptanspruch, wobei die optische Komponente (70) ein optisches Filter umfasst, das die Eigenschaft hat, einen Lichtstrahl (IR) im Infrarotspektrum durchzulassen und einen Lichtstrahl (V) im sichtbaren Spektrum zu reflektieren, wobei die optische Komponente (70) insbesondere eine dichroitische Platte oder ein dichroitischer Spiegel ist.

3. Leuchte (12) nach einem der vorstehenden Ansprüche, wobei die optische Komponente (70) eine optisch strukturierte Oberfläche (72) aufweist, um optische Strahlen des reflektierten Lichtstrahls (V, IR) so zu streuen, dass die Umlenkung der optischen Strahlen zum Beleuchtungsfenster (34) begünstigt wird.

4. Leuchte (12) nach einem der vorstehenden Ansprüche, die ein optisches Relais für die bidirektionale Datenübertragung zwischen einem Li-Fi-Modul (60), das zum Senden und/oder Empfangen eines mit zu übertragenden Daten modulierten Infrarotlichtstrahls (IR) ausgelegt ist, und einem entfernten Endgerät (16) bildet, wobei die Leuchte (12) einen Bereich begrenzt, der sich innerhalb und/oder außerhalb der Aufnahme (30) erstreckt, die für die Aufnahme des Li-Fi-Moduls (60) konfiguriert ist, wobei der Bereich in Abwärtsrichtung betrachtet vor der optischen Komponente (70) auf dem zweiten optischen Weg (C2) angeordnet ist.

5. Leuchte (12) nach einem der vorstehenden Ansprüche, wobei die optische Komponente (70) mit einer das sichtbare Licht reflektierenden Oberfläche (72) versehen ist und an einer der Vorderwand (30A) gegenüberliegenden Rückwand (30B) angeordnet ist, sodass die optische Komponente (70) die Dicke der Rückwand (30B) durchdringt und die Oberfläche (72) auf der Seite einer Innenfläche der Rückwand (30B) aufweist.

6. Leuchte (12) nach einem der vorstehenden Ansprüche, mit einem Reflektor (40), der in der Aufnahme (30) auf dem ersten Lichtweg (C1) angeordnet ist und so konfiguriert ist, dass er im sichtbaren Spektrum hauptsächlich in Richtung des Beleuchtungsfensters (32) reflektiert, wobei sich die optische Komponente (70) in einem Bereich (44) des Gehäuses (30) erstreckt, der im Wesentlichen am Schnittpunkt (I) der beiden optischen Pfade (C1, C2) liegt, so dass in diesem Bereich (44) der sichtbare Lichtstrahl (V), der sich entlang des ersten optischen Weges (C1) ausbreitet, überwiegend von der optischen Komponente (70) reflektiert wird und der Infrarotlichtstrahl (IR), der sich entlang des zweiten optischen Weges (C2) ausbreitet, überwiegend von der optischen Komponente (70) durchgelassen wird.

7. Leuchte (12) nach dem vorhergehenden Anspruch, wobei die Aufnahme (30) eine allgemeine Plattenform aufweist, die Lichtquelle (34) innerhalb der Platte (12) angeordnet ist, um durch die Platte (12) entlang einer Kante einer Umfangswand (30P) der Platte (12) zu beleuchten, und der Reflektor (40) eine Rückwand (30B) der Platte (12) bildet, mit der die optische Komponente (70) im Schnittbereich (44) gekoppelt ist.

8. Leuchte (12) nach Anspruch 6, wobei die Lichtquelle (34) und die optische Komponente (70) an einer Rückwand (30B) des Gehäuses (30) angeordnet sind, wobei das Gehäuse (30) eine im Wesentlichen reflektierende Innenfläche (42) umfasst, die den Reflektor (40) bildet, sodass der erste optische Weg (C1) eine Vielzahl von Reflexionen an der reflektierenden Innenfläche (42) des Gehäuses (30) in Richtung der Rückwand (30B) umfasst und sich der zweite optische Weg (C2) direkt zwischen der Rückwand (30B) und der Vorderwand (C1) erstreckt.

9. Leuchte (12) nach einem der vorstehenden Ansprüche, wobei der erste optische Weg (C1) indirekt mit einer Vielzahl von optischen Reflexionen ist und der zweite optische Weg (C2) direkt ohne optische Reflexion ist, indem er sich beispielsweise im Wesentlichen geradlinig zwischen einer Rückwand (30B) und einer Vorderwand (30A) der Leuchte (12) erstreckt.

10. Leuchte (12) nach einem der vorstehenden Ansprüche, mit einem Diffusor (58) zum Streuen von sichtbarem Licht durch das Beleuchtungsfenster (32), der in einem Schnittbereich des Diffusors (58) mit dem zweiten optischen Weg (C2) lokal durchbrochen ist.

11. Li-Fi-Datenkommunikationsvorrichtung (100) mit einer Leuchte (12) gemäß einem der vorstehenden Ansprüche und einem Li-Fi-Modul (60), das zum Senden und/oder Empfangen eines durch zu übertragende Daten modulierten Infrarotlichtstrahls (IR) ausgelegt ist und ein Verbindungselement (64) zum Anschluss des Moduls an ein externes Kommunikationsnetzwerk, wie beispielsweise das Internet, **dadurch gekennzeichnet, dass** sich das Li-Fi-Modul (60) stromaufwärts der optischen Komponente (70) entlang des zweiten optischen Pfades (C2) erstreckt, wenn man eine abwärts gerichtete Richtung zwischen dem Li-Fi-Modul (60) und einem entfernten Endgerät (16) betrachtet.

## Claims

1. Light fixture (12) adapted for bidirectional data communication via Li-Fi, the luminaire (12) being intended to form an optical relay for bidirectional data transmission between a Li-Fi module (60) adapted to transmit and/or receive a beam of infrared (IR) light modulated by data to be transmitted using Li-Fi technology and a remote terminal (16), the luminaire comprising a receptacle (30) defining the external dimensions of the luminaire (12) provided with a front wall (30A) comprising a lighting window (32) and a lighting light source (34) in the visible spectrum, the luminaire (12) defines a first optical path (C1) for propagating a visible light beam (V) inside the receptacle (30) between the lighting source (34) and the lighting window (32), **characterized in that** the luminaire (12) defines a second optical path (C2) for propagating an infrared light beam (IR) inside the receptacle (30) to the lighting window (32) to form a bidirectional data communication path via Li-Fi, **and in that** the luminaire (12) further comprises an optical component (70) that is spectrally selective between the visible and infrared spectra, disposed at an intersection (I) of the two optical paths (C1, C2), this component (70) being configured to transmit the light beam (IR, V) propagating along one of said optical paths (C2, C1) and to reflect the other light beam (V, IR) propagating along the other of said optical paths (C1, C2) in order to combine the two light beams, visible (V) and infrared (IR), between the optical component (70) and the illumination window (32).

2. Lighting fixture (12) according to the main claim, wherein the optical component (70) comprises an optical filter having the property of transmitting a light beam (IR) in the infrared spectrum and reflecting a light beam (V) in the visible spectrum, the optical component (70) being in particular a dichroic plate or a dichroic mirror.

3. Lighting fixture (12) according to any of the preceding claims, wherein the optical component (70) has an optically structured surface (72) to scatter optical rays of the reflected light beam (V, IR) so as to promote the redirection of the optical rays toward the lighting window (34).

4. Lighting fixture (12) according to any of the preceding claims, forming an optical relay for bidirectional data transmission between a Li-Fi module (60) adapted to transmit and/or receive an infrared (IR) light beam modulated by data to be transmitted and a remote terminal (16), the luminaire (12) delimits a location, extending inside and/or outside the receptacle (30) configured for receiving the Li-Fi module (60), said location being disposed upstream of the optical component (70) on the second optical path (C2) considering the downward direction.

5. Light fixture (12) according to any of the preceding claims, wherein the optical component (70) is provided with a surface (72) reflecting visible light and is arranged on a rear wall (30B) opposite the front wall (30A), so that the optical component (70) passes through the thickness of the rear wall (30B) and has the surface (72) on the side of an inner face of the rear wall (30B).

6. A luminaire (12) according to any of the preceding claims, comprising a reflector (40) arranged in the receptacle (30) on the first optical path (C1) configured to reflect in the visible spectrum mainly in the direction of the lighting window (32), the optical component (70) extending into a region (44) of the receptacle (30) located substantially at the intersection (I) of the two optical paths (C1, C2) such that, in this region (44), the visible light beam (V) propagating along the first optical path (C1) is mainly reflected by the optical component (70) and the infrared light beam (IR) propagating along the second optical path (C2) is mainly transmitted by the optical component (70).

7. Lighting fixture (12) according to the preceding claim, wherein the receptacle (30) has a general panel shape, the light source (34) is disposed inside the panel (12) to illuminate through the panel (12) along an edge of a peripheral wall (30P) of the panel (12), and the reflector (40) forms a back wall (30B) of the panel (12) with which the optical component (70) is coupled in the intersection region (44).

8. Lighting fixture (12) according to claim 6, wherein the light source (34) and the optical component (70) are disposed on a back wall (30B) of the receptacle (30), the receptacle (30) comprising a substantially reflective inner surface (42) forming the reflector (40), such that the first optical path (C1) includes a plurality of reflections on the reflective inner surface (42) of the receptacle (30) toward the back wall (30B) and the second optical path (C2) extends directly between the back wall (30B) and the front wall (C1).

9. Lighting fixture (12) according to any of the preceding claims, wherein the first optical path (C1) is indirect with a plurality of optical reflections and the second optical path (C2) is direct without optical reflection, for example by extending substantially straight between a rear wall (30B) and a front wall (30A) of the luminaire (12).

10. Lighting fixture (12) according to any of the preceding claims, comprising a diffuser (58) for diffusing visible light through the lighting window (32), being locally perforated in an area of intersection of the diffuser (58) with the second optical path (C2).

11. Li-Fi data communication assembly (100) comprising a luminaire (12) according to any of the preceding claims and a Li-Fi module (60) adapted to transmit and/or receive a beam of infrared (IR) light modulated by data to be transmitted, comprising a connector element (64) for connecting the module to an external communication network, such as the Internet, **characterized in that** the Li-Fi module (60) extends upstream of the optical component (70) along the second optical path (C2) when considering a downstream direction between the Li-Fi module (60) and a remote terminal (16).
